# EUROPEAN PATENT APPLICATION

(11) **EP 4 303 456 A1**
(43) Date of publication of application: **10.01.2024**
(21) Application number: 22780127.1
(22) Date of filing: 16.03.2022
(51) Int. Cl.: F16C 19/16, F16C 19/36, F16C 19/54, F16C 35/06, F16H 1/06, H02K 7/116, F16H 57/021

(54) **ELECTRIC MOTOR WITH GEAR**

(30) Priority: 30.03.2021 JP 2021057623
(71) Applicant: Aichi Steel Corporation, Tokai-shi, Aichi 476-8666 (JP)
(72) Inventor: WATANABE, Hayato, Tokai-shi, Aichi 476-8666 (JP); HIRANO, Hiroaki, Tokai-shi, Aichi 476-8666 (JP); ISHIDA, Kazuya, Tokai-shi, Aichi 476-8666 (JP); ONO, Takashi, Tokai-shi, Aichi 476-8666 (JP)
(74) Representative: Barker Brettell LLP
(86) International application number: PCT/JP2022/011992
(87) International publication number: WO 2022/209907

(57) **Abstract**

A geared electric motor comprises: an output gear configured to rotate around an axial line parallel to a rotor shaft as an axis of rotation; an output shaft configured to rotate integrally with the output gear, the output shaft being arranged at a position facing an input gear with a distance in a direction of the axis of rotation; a first holding member holding the rotor bearing; a second holding member holding a first output bearing; and a third holding member holding a second output bearing. The first holding member, the second holding member, and the third holding member are fixed to each other with the third holding member sandwiched between the first holding member and the second holding member.

## Description

### CROSS-REFERENCE TO RELATED APPLICATION

This international application claims the benefit of Japanese Patent Application No. 2021-057623 filed on March 30, 2021 with the Japan Patent Office, and the entire disclosure of Japanese Patent Application No. 2021-057623 is incorporated herein by reference.

### TECHNICAL FIELD

The present disclosure relates to a geared electric motor, such as a geared motor.

### BACKGROUND ART

The geared motor is, for example, a device in which an electric motor is integrated with a speed reducer comprising multiple gears as described in Patent Document 1.

### PRIOR ART DOCUMENTS

### PATENT DOCUMENTS

Patent Document 1: Japanese Unexamined Patent Application Publication No. 2005-351464

### SUMMARY OF THE INVENTION

### PROBLEMS TO BE SOLVED BY THE INVENTION

The present disclosure discloses an example of a geared electric motor that can be made smaller in external dimensions.

### MEANS FOR SOLVING THE PROBLEMS

A geared electric motor according to one aspect of the present disclosure comprises: an input gear provided to a rotor shaft of an electric motor; a power transmission mechanism including at least one output gear configured to rotate by receiving a rotational force from the input gear; an output gear configured to rotate by receiving a rotational force from the power transmission mechanism and output the rotational force to the outside, the output gear rotating around an axial line parallel to the rotor shaft as an axis of rotation; an output shaft configured to rotate integrally with the output gear, the output shaft being arranged at a position facing the input gear with a distance in a direction of the axis of rotation; a rotor bearing rotatably supporting the rotor shaft, the rotor bearing being arranged on a side opposite the output shaft across the input gear; a first output bearing rotatably supporting the output gear, the first output bearing being arranged on a side opposite the input gear across the output gear; a second output bearing rotatably supporting the output gear, the second output bearing being arranged on an input gear side of the output gear; a first holding member holding the rotor bearing; a second holding member holding the first output bearing; and a third holding member holding the second output bearing, wherein the first holding member, the second holding member, and the third holding member are fixed to each other with the third holding member sandwiched between the first holding member and the second holding member.

This configuration makes it possible to reduce dimensions in a direction parallel to the rotor shaft (hereinafter, also referred to as "axial direction") and in a direction perpendicular to the rotor shaft (hereinafter, also referred to as "radial direction").

That is, in the technique disclosed in Patent Document 1, an output shaft is shifted from a position facing an input gear (a rotor shaft). In other words, the output shaft of Patent Document 1 is shifted in the radial direction relative to the rotor shaft.

Thus, in the technique described in Patent Document 1, a dimension in the radial direction is larger than that of the present geared electric motor. In other words, the present geared electric motor has a smaller dimension in the radial direction than the technique described in Patent Document 1.

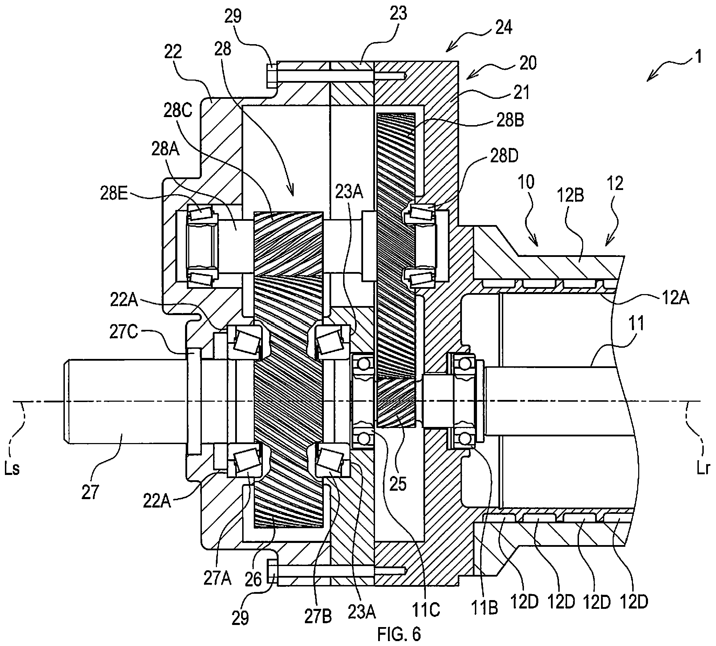

Here, in a case where the output shaft is arranged at a position facing the input gear, if the rotor shaft is supported by two rotor bearings including the above-described rotor bearing (see FIG. 6), a rotor bearing other than the above-described rotor bearing becomes an obstacle, making it difficult to reduce the dimension in the axial direction.

In contrast, in the present geared electric motor, the output shaft is arranged at a position facing the input gear with a distance. That is, the present geared electric motor does not comprise the other rotor bearing. Therefore, the present geared electric motor can have a smaller dimension in the axial direction than the configuration in which the rotor shaft is supported by the two rotor bearings.

### BRIEF DESCRIPTION OF THE DRAWINGS

FIG. 1 is an external view of a geared electric motor of a first embodiment.
FIG. 2 is an exploded view of the geared electric motor of the first embodiment.
FIG. 3 shows an internal configuration of the geared electric motor of the first embodiment.
FIG.4 shows a second holding member.
FIG.5 shows a third holding member.
FIG.6 is a diagram to explain the downsizing of the geared electric motor of the first embodiment.

### EXPLANATION OF REFERENCE NUMERALS

1...geared electric motor, 10...electric motor part, 11...rotor shaft, 11A...bearing, 11B...rotor bearing, 12...cooling section, 12A...inner cover, 12B...outer cover, 20...gear box part, 21...first holding member, 22... second holding member, 22A...first restriction portion, 23...third holding member, 23A... second restriction portion, 24...gear casing, 25...input gear, 26...output gear, 27... output shaft, 27A...first output bearing, 27B... second output bearing, 28... power transmission mechanism, 28A...countershaft, 28B... first transfer gear, 28C...second transfer gear, 28D, 28E...bearing, 29...bolt

### MODE FOR CARRYING OUT THE INVENTION

The following "embodiments" are examples of embodiments that fall within the technical scope of the present disclosure. That is, the matters, etc., described in the claims are not limited to the specific configurations, structures, or the like shown in the following embodiments.

Arrows, hatched lines, and the like in each figure are provided to facilitate understanding of the relationship between the figures and the shape of each component or part. Therefore, the invention shown in this disclosure is not limited to the directions indicated in each figure. Diagrams with hatched lines do not necessarily show cross-sectional views.

If members or parts are at least illustrated with reference numerals, it means that at least one of the members or parts is provided. That is, if there is no mention of "only one" or the like, two or more such members may be provided. The geared electric motor shown in this disclosure comprises components, such as members and parts at least illustrated with reference numerals, and illustrated structural parts.

### [First Embodiment]

### <1. Overview of Geared Electric Motor>

This embodiment is an example in which a geared electric motor of the present disclosure is applied to a geared motor used in a transportation equipment, such as an electric vehicle. The term "electric vehicle" as used herein refers to vehicles that can run using only an electric motor, vehicles that can run using both an electric motor and an internal combustion engine, and the like.

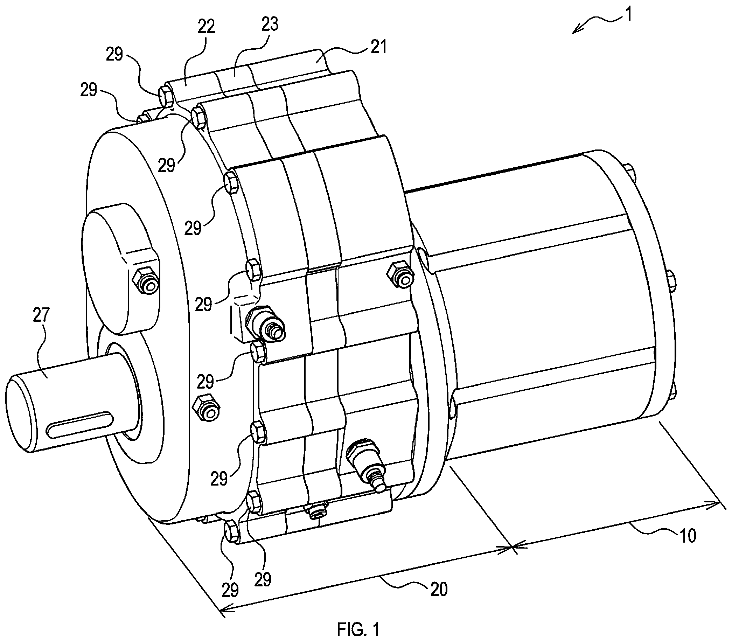

A geared electric motor 1 shown in FIG. 1 is a geared motor that generates power to drive a vehicle. The geared electric motor 1 at least comprises an electric motor part 10, a gear box part 20, and the like.

### <2. Details of Geared Electric Motor>

### <2.1 Electric Motor Part>

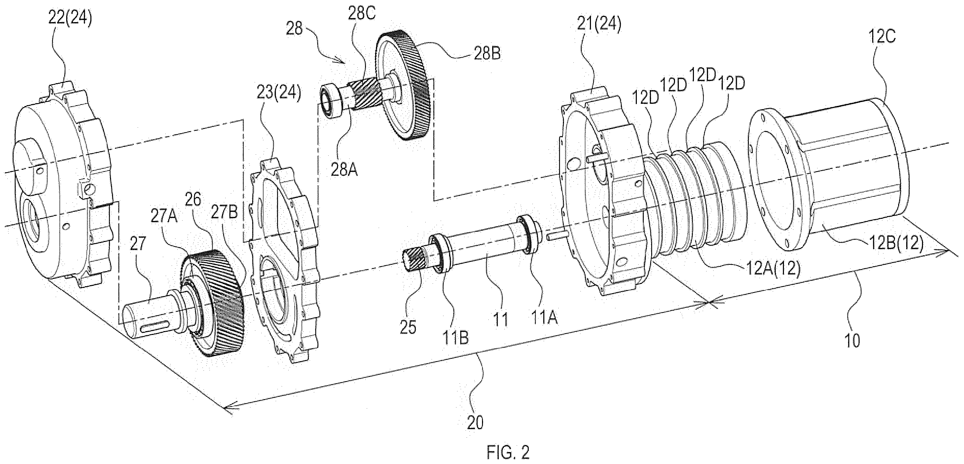

The electric motor part 10 is an electric motor at least comprising a rotor (not shown), a stator (not shown), and the like. The rotor is rotatably supported by a rotor shaft 11 (FIG. 2) extending along an axial line Lr.

In the electric motor part 10 of this embodiment, the rotor rotates in the stator. The rotor is a magnet rotor in which permanent magnets are embedded. The stator comprises a coil comprising a winding wire and a core around which the winding wire is wound.

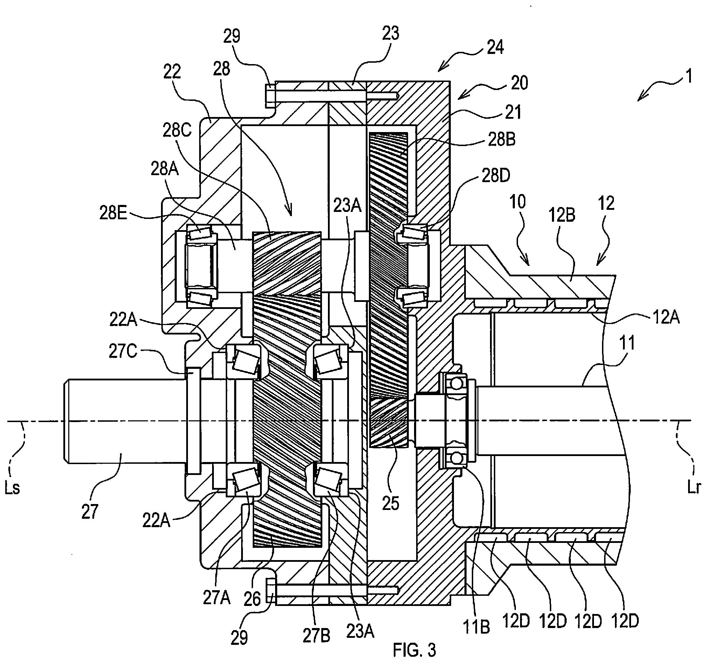

The outer periphery of the electric motor, i.e., the outer periphery of the stator is provided with a cooling section 12 as shown in FIG. 3. The cooling section 12 forms a water jacket to circulate a cooling liquid around the outer periphery of the stator.

As shown in FIG. 2, the cooling section 12 comprises an inner cover 12A, an outer cover 12B, a lid 12C, and the like. The inner cover 12A is a substantially cylindrical member covering the stator in contact with the outer periphery of the stator.

As shown in FIG. 3, the outer cover 12B is a substantially cylindrical member covering the inner cover 12A from the outside. The outer peripheral surface of the inner cover 12A or the inner peripheral surface of the outer cover 12B (in this embodiment, the outer peripheral surface of the inner cover 12A) is provided with multiple grooves 12D.

The multiple grooves 12D forms a part of a flow path through which the cooling liquid flows. With this configuration, the electric motor part 10 is cooled by the cooling liquid. That is, the electric motor part 10 of this embodiment is a liquid-cooled type.

As shown in FIG. 2, the lid 12C closes a first end side (a right end side in FIG. 2) of the electric motor part 10 in the axial direction. The lid 12C of this embodiment is fixed to the outer cover 12B by a fastener, such as a bolt.

On the first end side and the second end side of the rotor shaft 11 in the axial direction, bearings 11A, 11B are respectively provided. The bearings 11A, 11B rotatably support the rotor shaft 11. The bearings 11A, 11B comprise rolling bearings (angular ball bearings in this embodiment).

In the two bearings 11A, 11B, the bearing 11B on a gear box part 20 side (hereinafter, referred to as "rotor bearing 11B") is held by a first holding member 21, and the other bearing 11A is supported by the lid 12C or the inner cover 12A through a holding member that is not shown.

### <2.2 Gear Box Part>

The gear box part 20 is configured to change the speed (reduce the speed in this embodiment) of a rotational force output from the electric motor part 10, and output it to the outside. Specifically, as shown in FIG. 2, the gear box part 20 at least comprises a gear casing 24, an input gear 25, an output gear 26, an output shaft 27, a power transmission mechanism 28, and the like.

### <Gear Casing>

The gear casing 24 is a member that houses the input gear 25, the output gear 26, a part of the output shaft 27, the power transmission mechanism 28, and the like. The gear casing 24 comprises the first holding member 21, a second holding member 22, a third holding member 23 and the like.

### <Input Gear>

As shown in FIG. 3, the input gear 25 rotates integrally with the rotor shaft 11. That is, the output of the electric motor part 10 is input into the gear box part 20 by the input gear 25.

The input gear 25 of this embodiment is formed by directly gear-cutting the outer peripheral surface of the rotor shaft 11 in a portion located at the second end in the axial direction. The input gear 25 is a helical gear in which a tooth trace direction spirally extends.

### <Power Transmission Mechanism>

The power transmission mechanism 28 is a gear mechanism comprising at least one gear configured to rotate by receiving a rotational force from the input gear 25. Specifically, the power transmission mechanism 28 at least comprises a countershaft 28A, a first transfer gear 28B, a second transfer gear 28C, and the like.

The countershaft 28A is a shaft member parallel to the rotor shaft 11. The countershaft 28A is rotatably supported by the first holding member 21 and the second holding member 22. Specifically, the first end of the countershaft 28A in the axial direction is supported by the first holding member 21 through a bearing 28D.

The second end of the countershaft 28A in the axial direction is supported by the second holding member 22 through a bearing 28E. The bearings 28D, 28E comprise rolling bearings (tapered roller bearings in this embodiment).

The first transfer gear 28B meshes with the input gear 25 and rotates integrally with the countershaft 28A. The second transfer gear 28C meshes with the output gear 26 and rotates integrally with the countershaft 28A.

The first transfer gear 28B and the second transfer gear 28C of this embodiment are helical gears. The countershaft 28A, the first transfer gear 28B, and the second transfer gear 28C are integrally molded by forging and the like and constitutes an integral part.

### <Output Gear and Output Shaft>

The output gear 26 is configured to rotate by receiving a rotational force from the power transmission mechanism 28, and output the rotational force to the outside. The output gear 26 rotates around an axis of rotation Ls parallel to the rotor shaft 11. The output gear 26 of this embodiment is a helical gear.

The output shaft 27 is a shaft member configured to rotate integrally with the output gear 26 and that supports the output gear 26. The output shaft 27 is arranged at a position facing the input gear 25 with a distance in the direction of the axis of rotation Ls.

In this embodiment, the axial line Lr of the rotor shaft 11 coincides with the axis of rotation Ls of the output shaft 27. That is, the rotor shaft 11 and the output shaft 27 are arranged side by side on a straight line. The output gear 26 and the output shaft 27 are integrally molded by forging and the like and constitutes an integral part.

In a clearance between the gear casing 24 (the second holding member 22 in this embodiment) and the output shaft 27, an oil seal 27C is arranged. The oil seal 27C prevents the lubricating oil in the gear casing 24 from leaking out from the clearance to the outside.

### <Bearing and Support Structure of the Bearing>

In addition to the above-described bearings 28D, 28E, the gear box part 20 at least comprises a rotor bearing 11B, a first output bearing 27A, a second output bearing 27B, and the like. The rotor bearing 11B is arranged on a side opposite the output shaft 27 across the input gear 25.

The first output bearing 27A and the second output bearing 27B rotatably support the output shaft 27. The first output bearing 27A and the second output bearing 27B of this embodiment comprise rolling bearings (tapered roller bearings in this embodiment).

The first output bearing 27A is arranged on a side opposite the input gear 25 across the output gear 26. The second output bearing 27B is arranged on an input gear 25 side of the output gear 26.

That is, the first output bearing 27A is arranged on one side of the output gear 26, and the second output bearing 27B is arranged on the other side of the output gear 26. In other words, the output shaft 27 and the output gear 26 are rotatably supported by the first output bearing 27A and the second output bearing 27B that are spaced apart from each other in an axial direction.

The rotor bearing 11B is held by the first holding member 21. The first output bearing 27A is held by the second holding member 22. The second output bearing 27B is held by the third holding member 23. The third holding member 23 is sandwiched between the first holding member 21 and the second holding member 22.

That is, the third holding member 23 is a plate-shaped member (see FIG. 2). The first holding member 21, the second holding member 22, and the third holding member 23 are fixed to each other with multiple bolts 29 or other fasteners (see FIG. 1).

Specifically, as shown in FIG. 3, each bolt 29 is inserted from a first holding member 21 side or a second holding member 22 side (from the second holding member 22 side in this embodiment), penetrates the third holding member 23, and fastens the third holding member 23 and the first holding member 21.

Thus, the third holding member 23 sandwiched between the first holding member 21 and the second holding member 22 is fixed to and integrated with the first holding member 21 and the second holding member 22. Mating surfaces of the first holding member 21, the second holding member 22, and the third holding member 23 are sealed with seal materials, such as liquid packings.

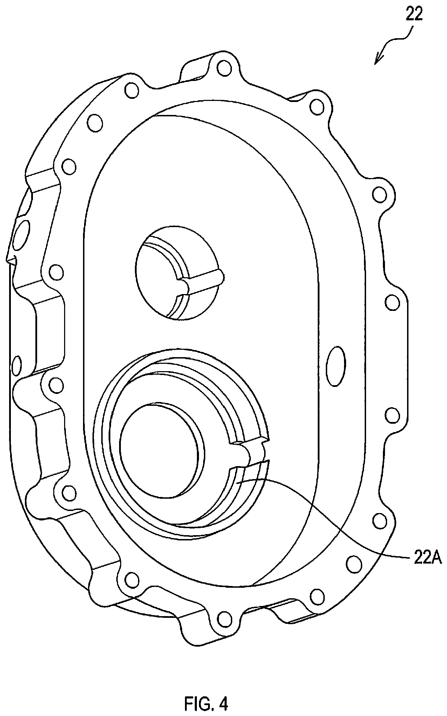

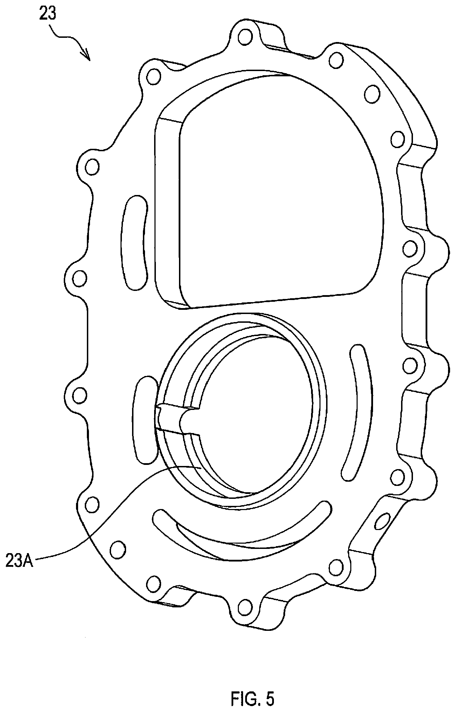

In the present embodiment, the first holding member 21 and the inner cover 12A are integrally molded by forging and the like, and constitute an integral part (see FIG. 2). The second holding member 22 is provided with a collar-shaped first restriction portion 22A (see FIG. 4). The third holding member 23 is provided with a collar-shaped second restriction portion 23A (see FIG. 5).

The first restriction portion 22A is in contact with a part (a left surface in FIG. 3) of the side surfaces of the first output bearing 27A, the part being located on a side opposite the output gear 26. The first restriction portion 22A restricts a displacement of the first output bearing 27A toward the side opposite the output gear 26 (toward the left in FIG. 3).

The second restriction portion 23A is in contact with a part (a right surface in FIG. 3) of the side surfaces of the second output bearing 27B, the part being located on a rotor shaft 11 side. The second restriction portion 23A restricts a displacement of the second output bearing 27B toward the rotor shaft 11 side.

### <3. Features of Geared Electric Motor of this Embodiment>

In the geared electric motor 1 of this embodiment, dimensions can be small in a direction parallel to the rotor shaft 11 (hereinafter, also referred to as "axial direction") and in a direction perpendicular to the rotor shaft 11 (hereinafter, also referred to as "radial direction").

That is, in the technique disclosed in Patent Document 1, an output shaft is shifted from a position facing an input gear (a rotor shaft). In other words, the output shaft of Patent Document 1 is shifted in the radial direction relative to the rotor shaft.

Therefore, in the technique of Patent Document 1, a dimension in the radial direction is larger than that of the geared electric motor 1. In other words, the geared electric motor 1 has a smaller dimension in the radial direction than the invention of Patent Document 1.

Here, in a case where the output shaft 27 is arranged at a position facing the input gear 25, if a part of the rotor shaft 11 to support the input gear 25 is configured to be supported by two rotor bearings including the rotor bearing 11B as shown in FIG. 6, the second rotor bearing 11C becomes an obstacle, making it difficult to reduce the dimension in the axial direction.

It is difficult to assemble the second rotor bearing 11C in addition to the rotor bearing 11B from the viewpoint of centering. This is because the first holding member 21 holding the rotor bearing 11B and the third holding member 23 holding the second rotor bearing 11C are separate members, and thus, in order for the centering, it is necessary to achieve both high processing accuracy and high assembly accuracy in the first holding member 21 and the third holding member 23.

In contrast, in the geared electric motor 1, as shown in FIG. 3, the output shaft 27 is arranged at a position facing the input gear 25 with a distance in the direction of the axis of rotation Ls. That is, the geared electric motor 1 does not comprise the second rotor bearing 11C.

Therefore, the geared electric motor 1 can have a smaller dimension in the axial direction than the configuration in which the rotor shaft 11 is supported by the two rotor bearings (see FIG. 6). Thus, the geared electric motor 1 has excellent mountability on an electric vehicle. In addition, assembling the geared electric motor 1 is easy.

In this embodiment, the first holding member 21 and the inner cover 12A are integrally formed (see FIG. 2). Thus, the rotor bearing 11B can be cooled through the first holding member 21, making it possible to inhibit a seizure of the rotor bearing 11B.

### [Other Embodiments]

The gear box part 20 of the above-described embodiment comprises a speed reduction mechanism. However, the present disclosure is not limited to this configuration. That is, the gear box part 20 may include, for example, a speed increase mechanism and may comprise a speed change mechanism where a speed reducing ratio or a speed increasing ratio can be changed.

The gears of the above-described embodiment are helical gears. However, the present disclosure is not limited to this configuration. That is, each gear may be, for example, a spur gear or a bevel gear.

In the above-described embodiment, the angular ball bearing or the tapered roller bearing are adopted. However, the present disclosure is not limited to this configuration. That is, in this disclosure, for example, a radial bearing and a thrust bearing may be adopted. When the gears are spur gears, only the radial bearing may be adopted.

In the above-described embodiment, the rolling bearing is adopted as a bearing. However, the present disclosure is not limited to this configuration. That is, in this disclosure, for example, a slide bearing (e.g., a metal bearing) using an oil film, a slide bearing using a solid lubricant or the like may be adopted as a bearing.

In the above-described embodiment, the axial line of the rotor shaft 11 coincides with the axial line of the output shaft 27. However, the present disclosure is not limited to this configuration. That is, in this disclosure, for example, the axial line of the rotor shaft 11 does not necessarily coincide with the axial line of the output shaft 27.

In the above-described embodiment, the first holding member 21 and the inner cover 12A are integrally formed. However, the present disclosure is not limited to this configuration. That is, in this disclosure, for example, the first holding member 21 and the inner cover 12A (the cooling section 12) may be separately formed.

The electric motor part 10 of the above-described embodiment is the liquid-cooled type. However, the present disclosure is not limited to this configuration. That is, in this disclosure, for example, the electric motor part 10 may be an air-cooled type.

Furthermore, the present disclosure is not limited to the above-described embodiments as long as it conforms to the gist of the disclosure described in the above-described embodiments. Therefore, a configuration may be adopted in which at least two of the above-described embodiments are combined, or in which any of the elements illustrated or described with reference numerals in the above-described embodiments are omitted.

## Claims

1. A geared electric motor comprising:
an input gear provided to a rotor shaft of an electric motor;
a power transmission mechanism including at least one gear configured to rotate by receiving a rotational force from the input gear;
an output gear configured to rotate by receiving a rotational force from the power transmission mechanism and output the rotational force to the outside, the output gear rotating around an axial line parallel to the rotor shaft as an axis of rotation;
an output shaft configured to rotate integrally with the output gear, the output shaft being arranged at a position facing the input gear with a distance in a direction of the axis of rotation;
a rotor bearing rotatably supporting the rotor shaft, the rotor bearing being arranged on a side opposite the output shaft across the input gear;
a first output bearing rotatably supporting the output gear, the first output bearing being arranged on a side opposite the input gear across the output gear;
a second output bearing rotatably supporting the output gear, the second output bearing being arranged on an input gear side of the output gear;
a first holding member holding the rotor bearing;
a second holding member holding the first output bearing; and
a third holding member holding the second output bearing,
wherein the first holding member, the second holding member, and the third holding member are fixed to each other with the third holding member sandwiched between the first holding member and the second holding member.

2. The geared electric motor according to claim 1,
wherein an axial line of the rotor shaft coincides with an axial line of the output shaft.

3. The geared electric motor according to claim 1 or 2,
wherein the third holding member is a plate-shaped member, and
wherein the first holding member, the second holding member, and the third holding member are integrated with each other by a fastener that penetrates the third holding member and that fastens the first holding member and the third holding member.

4. The geared electric motor according to any one of claims 1 to 3,
wherein the power transmission mechanism comprises:
a countershaft parallel to the rotor shaft, the countershaft being rotatably supported by the first holding member and the second holding member;
a first transfer gear configured to rotate integrally with the countershaft, the first transfer gear meshing with the input gear; and
a second transfer gear configured to rotate integrally with the countershaft, the second transfer gear meshing with the output gear.

5. The geared electric motor according to any one of claims 1 to 4,
wherein the first output bearing and the second output bearing are angular ball bearings or tapered roller bearings,
wherein the second holding member is provided with a first restriction portion, the first restriction portion being in contact with a part of side surfaces of the first output bearing, the part being located on a side opposite the output gear, the first restrict portion restricting a displacement of the first output bearing toward the side opposite the output gear, and
wherein the third holding member is provided with a second restriction portion, the second restriction portion being in contact with a part of side surfaces of the second output bearing, the part being located on a rotor shaft side, the second restriction portion restricting a displacement of the second output bearing toward the rotor shaft side.
